(19) Europäisches Patentamt

European Patent Office

Office européen des brevets

(11) **EP 2 477 157 A1**

(12) **EUROPEAN PATENT APPLICATION**
published in accordance with Art. 153(4) EPC

(43) Date of publication:
**18.07.2012 Bulletin 2012/29**

(51) Int Cl.:
*G06T 7/00* (2006.01)  *G06F 21/20* (2006.01)

(21) Application number: **10815272.9**

(22) Date of filing: **20.08.2010**

(86) International application number:
**PCT/JP2010/064540**

(87) International publication number:
**WO 2011/030675 (17.03.2011 Gazette 2011/11)**

(84) Designated Contracting States:
**AL AT BE BG CH CY CZ DE DK EE ES FI FR GB GR HR HU IE IS IT LI LT LU LV MC MK MT NL NO PL PT RO SE SI SK SM TR**

(30) Priority: **09.09.2009 JP 2009208042**

(71) Applicant: **NEC Corporation**
**Tokyo 108-8001 (JP)**

(72) Inventor: **MONDEN, Akira**
**Tokyo 108-8001 (JP)**

(74) Representative: **Glawe, Delfs, Moll**
**Patent- und Rechtsanwälte**
**Postfach 26 01 62**
**80058 München (DE)**

(54) **BIOMETRIC AUTHENTICATION SYSTEM, METHOD AND PROGRAM**

(57) Provided are a biometric authentication system which can guarantee an FMR in a practical processing time even when an attacker attacks the biometric authentication system by selectively using query data in which data of a set other than a biometric information data set is included, a biometric authentication method, and a biometric authentication program.

The biometric authentication system of the present invention is characterized by including rating value calculation means 5 for calculating a probability that input data randomly matches given data and taking it as a rating value; and determination means 6 for determining whether or not the input data is identified as template data indicating biometric information stored in advance based on the rating value calculated by the rating value calculation means 5.

## Fig. 16

RATING VALUE CALCULATION MEANS — 5

DETERMINATION MEANS — 6

**Description**

Technical field

The present invention relates to a biometric authentication system which authenticates a person by checking inputted biometric information against the biometric information registered in a database, a method, and a program.

Background art

A biometrics authentication using personal biometric information (physical feature) is used for a method for authenticating a person. In this method, person-specific biometric information such as fingerprint information, face information, or the like of a registrant is registered in a database in advance and by checking the biometric information (query data) presented by a person to be authenticated who wants to be certified against the registered biometric information (template), it is authenticated whether or not the person who wants to be certified is the registrant who registered the template. In the checking of the query data against the template, usually, a matching rating value such as degree of similarity, distance, or the like between the template and the query data is calculated and a determination is performed by using a result of a comparison between the matching rating value and a threshold value determined in advance.

In the biometric authentication system, two types of errors occur. One is false rejection in which the person who wants to be certified is not determined as the registrant even when the person who wants to be certified is the registrant and the other is false acceptance in which a person who is not the registrant is determined as the registrant. A probability that the false rejection occurs is called a false rejection rate (FRR) or a false non-matching rate (FNMR) and a probability that the false acceptance occurs is called a false acceptance rate (FAR) or a false match rate (FMR).

The false non-matching rate and the false match rate indicate an error of a matching algorithm for comparing the matching rating value and the threshold value. Usually, the false rejection rate and the false acceptance rate indicate an error of a determination result in the authentication system based on the determination result of the matching algorithm that is obtained by comparing the matching rating value with the threshold value. In this case, the false rejection rate and the false acceptance rate are determined from the false non-matching rate and the false match rate.

The low false rejection rate (false non-matching rate) and the low false acceptance rate (false match rate) are desirable. These two types of errors are strongly related with each other. When the threshold value for the determination is relaxed, a case in which the registrant is erroneously determined as a non-registrant decreases and whereby, the low false rejection rate (false non-matching rate) can be obtained. However, in this case, a case in which the other person is erroneously determined as a registrant increases and whereby, the false acceptance rate (false match rate) becomes high. On the other hand, when the threshold value of the determination is restricted, a case in which the other person is erroneously determined as the registrant decreases and whereby, the low false acceptance rate (false match rate) can be obtained. However, in this case, a case in which the registrant is erroneously determined as the non-registrant increases and whereby, the false rejection rate (false non-matching rate) becomes high.

Thus, because the false rejection rate (false non-matching rate) and the false acceptance rate (false match rate) have a trade-off relation with each other, it is required to appropriately set the threshold value according to an applicable case. For example, in a system such as logon to a business system, an entrance/exit management system, or the like, in which it is required to secure a certain level of safety, an upper limit of the false acceptance rate that is acceptable in the system is determined and the threshold value is set so that the false acceptance rate (false non-matching rate) is less than the upper limit.

Generally, a relation between the threshold value (matching rating value) and the false acceptance rate (false non-matching rate), indicating that when the threshold value is changed, how much the false acceptance rate (false non-matching rate) is changed, is obtained as an average behavior of test data through an evaluation experiment using the test data. That is because there is no theoretical relationship between the matching rating value and the false acceptance rate (false non-matching rate) in many cases.

However, an average rating method using the test data that is widely used has a problem. In many cases, the easiness of occurrence of the false acceptance is different for each data. However, in the average rating method, the average rating is used. Therefore, it has a problem in which the rating is achieved as the average rating of the whole.

It is shown in Fig. 1 of the non-patent document 1 that an individual FMR (false match rate) is greatly different for each data. Hereinafter, the FMR obtained by achieving an average rating that is widely used is referred to as an average FMR and the FMR of each data that is obtained for each data is referred to as an individual FMR.

As shown in Fig. 1 of non-patent document 1, because the easiness of occurrence of the false match is different for each data, even when the threshold value is set so that it is lower than the desired FMR in average by using the average FMR, there is a risk in which the safety (FMR) desired for the authentication system can not be secured because the data with high individual FMR by which the false match easily occurs exists.

In non-patent document 1, an accuracy rating method by which the FMR of the authentication system can be statistically guaranteed by achieving a rating of a distribution of the individual FMR without achieving the rating by the average FMR that is widely used is disclosed.

In non-patent document 2, a check method by which the FMR of the authentication system can be theoretically guaranteed is disclosed. In this method, an occurrence distributions of a feature quantity of arbitrary biometric information is calculated in advance, a probability that the feature quantity randomly matches the arbitrary biometric information is taken as the matching rating value, and whereby, the FMR is theoretically guaranteed.

As a matching device in which a probability that the feature quantity randomly matches the arbitrary biometric information is taken as the matching rating valuer for example, a pattern matching device is described in patent document 1.

By the way, one of the attacks to the biometric authentication system is a wolf attack as described in non-patent document 3. In the wolf attack, a characteristic of which the easiness of occurrence of the false match is different for each data is utilized, an attacker selectively uses the data by which the false match easily occurs, and whereby, the false match occurs at a higher probability than the FMR expected in the authentication system.

Further, the attacker may select data from a set other than the set considered as the usual biometric information and perform an attack. Generally, the set of the biometric information that is commonly found is a part of the set of the data which can be inputted to the system because there is a restriction such as a physical restriction or the like as the biometric information. Accordingly, if data which can be created by only artificial means is used as a selection target and used for the attack, there is a possibility that the false match occurs at a higher probability than a case in which the data is selected from the set of the biometric information and it is used for the attack.

For example, it is described in non-patent document 4 that the false match occurs at a high probability when the data including the large number of feature points compared to the number of feature points found on the usual fingerprint is used as the query data for a fingerprint check method in which the determination is performed by using the number of the feature points that match each other.

Further, it is described in non-patent document 6 that the false match occurs with respect to all the templates when the data that cannot be obtained from a usual finger vein is used as the query data for a finger vein authentication method described in non-patent document 5.

An authentication method by which the safety against such wolf attack can be secured is disclosed in non-patent document 7. In this method, a check against a lot of data is performed for each authentication, it is determined whether the false match easily occurs, and whereby, the method can withstand the attack using the data by which the false match easily occurs.

[Prior art document]

[Patent document]

[patent document 1] Japanese Patent Application Laid-Open No. 2002-288687

[Non-patent document]

[non-patent document 1] Monden, Huang, and Yoshimoto: Accuracy Evaluation of Fingerprint Which Can Guarantee Individual Safety, Proc. of The 2005 Symposium on Cryptography and Information Security, pp. 541 - 546, 2005
[non-patent document 2] Monden, Huang, and Yoshimoto: Fingerprint Check Which Can Guarantee Individual Safety, Proc. of The 2007 Symposium on Cryptography and Information Security, 2007
[non-patent document 3] Une, Otsuka, and Imai: Wolf Attack Probability: a New Security Measure in Biometrics-Based Authentication Systems, Proc. of The 2007 Symposium on Cryptography and Information Security, 2007
[non-patent document 4] Kawakami, Shigetomi, Yoshizoe, Une, Otsuka, and Imai: A Theoretical Study on Wolves in Minutiae Matching Algorithm, Proc. of The 2007 Symposium on Cryptography and Information Security, 2007
[non-patent document 5] Miura, Nagasaka, and Miyatake: Feature Extraction of Finger Vein Patterns Based on Iterative Line Tracking and Its Application to Personal Identification, IEICE Transactions on Communications J86-DII, No. 5, pp. 678 - 687, 2003
[non-patent document 6] Watanabe, Shigetomi, Une, Otsuka, and Imai: Universal Wolves in a Matching Algorithm for Finger Vein Patterns, Proc. of Computer Security Symposium (CSS2006), 2006
[non-patent document 7] Kojima, Shigetomi, Inuma, Otsuka, and Imai: An Efficient and Secure Protocol in a Framework of Matching Algorithms Based on Wolf Attack Probability, Proc. of The 2009 Symposium on Cryptography and Information Security, 2009

Disclosure of the invention

Problems to be solved by the invention

However, even when the method disclosed in each of the above-mentioned documents is used, the FMR cannot be guaranteed in a practical processing time when the attacker performs the attack by selectively using the query data.

For example, in the method disclosed in non-patent document 1, it is assumed that a non-registrant disguises himself as the registrant and submits his biometric information. Accordingly, a probability that the query data randomly selected from a set of usual biometric information falsely matches the template data is statistically guaranteed. Therefore, a case in which the attacker selectively uses the data by which in particular, the false match easily occurs from the set of the biometric information or a case in which the attacker selectively uses the data by which in particular, the false match easily occurs from a set other than the set of the biometric information is not included in the statistics. Therefore, in these cases, the FMR cannot be guaranteed.

In the method described in non-patent document 2, the relation between the matching rating value and the FMR is theoretically calculated. Therefore, the individual FMR does not vary for each of the data. Accordingly, the data by which the false match easily occurs is not included in the set of the biometric information. Therefore, the attacker cannot perform the attack by selectively using the data by which in particular, the false match easily occurs from the set of the biometric information. Therefore, even when the attacker can select the data used for the attack from the set of the biometric information, the FMR can be guaranteed unlike the method described in non-patent document 1.

However, in the method described in non-patent document 2, a probability that one (fingerprint A) of two patterns compared with an arbitrary pattern that are calculated based on an occurrence distributions of the feature quantity of the biometric information randomly matches the arbitrary pattern is calculated and when the other (fingerprint B) of two patterns compared with the arbitrary pattern is selected from a set other than the set of the biometric information and it is used for the attack, a probability that the arbitrary pattern randomly matches the other pattern cannot be known. That is because it is not guaranteed that the feature quantity of the data selected from the set other than the set of the biometric information follows the occurrence distributions of the feature quantity of the biometric information. Therefore, there is a possibility that the attacker can select the data by which in particular, the false match easily occurs from a set other than the set of the biometric information and in this case, the FMR cannot be guaranteed.

Similarly, in the method described in patent document 1, it is not assumed that the data is selected from the set other than the set of the biometric information and it is used for the attack. Therefore, a probability of a case in which the feature quantity of the query data follows the occurrence distributions of the feature quantity of the biometric information is calculated or the query data and the template data are handled without discriminating from each other.

In the method described in non-patent document 7, the check against a lot of data is performed for each authentication and whereby, it is determined whether the false match easily occurs. In this method, because the easiness of occurrence of the false match is experimentally evaluated, the number of data has to be determined according to the required accuracy. For example, when a probability of the false authentication is reduced by 1/10,000,000, at least ten million data are required for each check and when the statistical variation is taken into consideration, tens of millions of data are required for each check. If tens of millions of the checks are performed for one authentication, it takes a long time for the authentication and convenience in practical use is remarkably lowered. For example, when it takes 1/1000 seconds for one authentication, 10,000 seconds are needed for 10,000,000 checks, in other words, approximately 2 hours and 47 minutes are needed. When this method is applied to a door unlocking system, it takes more than two hours to unlock the door. Therefore this method is unpractical.

Accordingly, an object of the present invention is to provide a biometric authentication system which can guarantee an FMR in a practical processing time even when an attacker attacks the biometric authentication system by selectively using the query data in which data of a set other than the biometric information data set is included, a biometric authentication method, and a biometric authentication program.

Means for solving the problems

A biometric authentication system according to the present invention is characterized by including rating value calculation unit which calculates a probability that inputted data randomly matches given data and obtain it as a rating value and determination unit which determines whether or not the inputted data is identified as template data indicating the biometric information stored in advance based on the rating value obtained by the rating value calculation unit.

A biometric authentication method according to the present invention is characterized by calculating a probability that inputted data randomly matches given data, obtaining it as a rating value, and determining whether or not the inputted data is identified as template data indicating the biometric information stored in advance based on the obtained rating value.

A computer readable non-transitory medium according to the present invention for storing a biometric authentication program that causes computer to perform an rating value calculation process in which a probability that inputted data randomly matches given data is calculated and it is obtained as a rating value and a determination process in which whether or not the inputted data is identified as template data indicating the biometric information stored in advance is determined based on the obtained rating value.

Effect of the invention

By using the present invention, the FMR can be guaranteed in a practical processing time even when the attacker attacks the biometric authentication system by selectively using the query data in which data of a set other than a biometric information data set is included.

Brief description of the drawings

[Fig. 1] Fig. 1 is a block diagram showing an example of a configuration of a biometric authentication system according to the present invention.
[Fig. 2] Fig. 2 is a flowchart showing an example of operation of a biometric authentication system.
[Fig. 3] Fig. 3 is a block diagram showing an example of a configuration of a biometric authentication system according to a second exemplary embodiment.
[Fig. 4] Fig. 4 is a flowchart showing an example of operation of a biometric authentication system according to a second exemplary embodiment.
[Fig. 5] Fig. 5 is a block diagram showing an example of a configuration of a biometric authentication system according to a third exemplary embodiment.
[Fig. 6A] Fig. 6A is a flowchart showing an example of operation of a biometric authentication system according to a third exemplary embodiment at the time of authentication.
[Fig. 6B] Fig. 6B is a flowchart showing an example of operation of a biometric authentication system according to a third exemplary embodiment at the time of registration.
[Fig. 7] Fig. 7 is an explanatory drawing showing an example of a feature point of fingerprint.
[Fig. 8] Fig. 8 is an explanatory drawing showing an example of a feature point determined as a corresponding feature point.
[Fig. 9] Fig. 9 is an explanatory drawing showing an example of a feature point determined as a non-corresponding feature point.
[Fig. 10] Fig. 10 is an explanatory drawing showing an example of a determination of a degree of matching between fingerprint feature points.
[Fig. 11] Fig. 11 is an explanatory drawing showing an example in which feature points are observed according to an occurrence distributions.
[Fig. 12] Fig. 12 is an explanatory drawing showing an example of comparison with arbitrary fingerprint data.
[Fig. 13] Fig. 13 is an explanatory drawing showing an example of vein query data.
[Fig. 14] Fig. 14 is an explanatory drawing showing an example of vein template data.
[Fig. 15] Fig. 15 is an explanatory drawing showing an example of labeling to indicate match/non-match for each pixel.
[Fig. 16] Fig. 16 is a block diagram showing an example of a minimum configuration of a biometric authentication system.

Most preferred mode for carrying out the invention

Exemplary embodiment 1

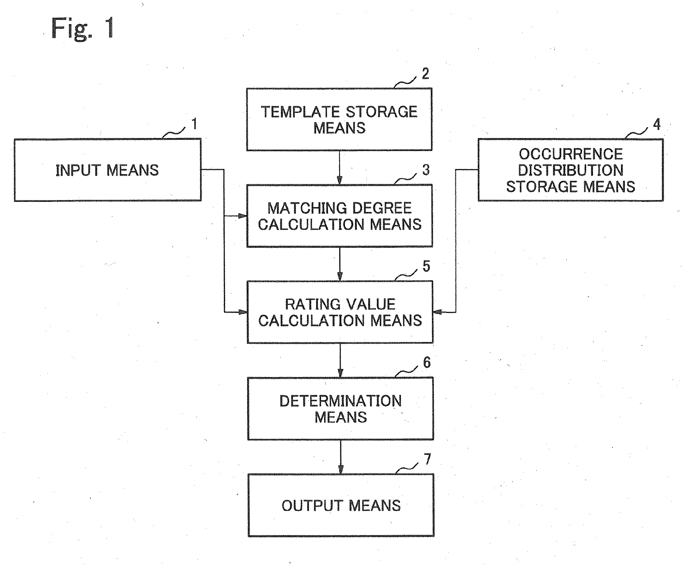

Next, a first exemplary embodiment of the present invention will be described with reference to the drawing. Fig. 1 is a block diagram showing an example of a configuration of a biometric authentication system according to the present invention. Referring to Fig. 1, in the first exemplary embodiment, the biometric authentication system of the present invention includes input means 1, template storage means 2, matching degree calculation means 3, occurrence distribution storage means 4, rating value calculation means 5, determination means 6, and output means 7. Further, specifically, the biometric authentication system is realized by using an information processing device such as a personal computer or the like.

The input means 1 are realized by specifically, an input device such as a fingerprint sensor or the like and a CPU of the information processing device which operates according to a program. The input means 1 have a function to input the data that is a query target as the query data in the biometric authentication system. The input means 1 have a function to read the query data of the query target that is used for determining whether or not a person that is the same as the person specified by the data registered as a template can be specified. For example, when a user performs an operation of putting his finger on a fingerprint read unit, the input means 1 input the query data including the fingerprint by using the fingerprint sensor.

The template storage means 2 are realized by specifically, a storage device such as an optical disk device, a magnetic disk device, or the like. The template storage means 2 record biometric information on the registrant of the biometric authentication system as the template data in advance. For example, the template data is registered in the template storage means 2 by a system administrator or the like in advance.

The matching degree calculation means 3 are realized by specifically, the CPU of the information processing device which operates according to a program. The matching degree calculation means 3 have a function to calculate a matching degree that indicates a degree of matching between the inputted query data and the template data recorded by the template storage means 2.

The occurrence distribution storage means 4 are realized by specifically, a storage device such as an optical disk device, a magnetic disk device, or the like. The occurrence distribution storage means 4 store an occurrence distributions of the feature quantity of the biometric information. With respect to the occurrence distributions, for example, the system administrator or the like creates distribution data through an experiment and registers it in the occurrence distribution storage means 4 in advance. Further, for example, the system administrator may calculate a logical value and register it in the occurrence distribution storage means 4. Further, the occurrence distributions of the feature quantity indicates a probability distribution in a case in which the feature quantity appears according to some probability distribution. For example, when a certain feature quantity X uniformly appears in a range of 0 to 1 (all values have the same probability), the occurrence distributions of the feature quantity X is a uniform distribution from 0 to 1. For example, when a certain feature quantity Y appears as a normal distribution having an average of 0 and a dispersion of 1, the occurrence distributions of the feature quantity Y is a normal distribution having an average of 0 and a dispersion of 1.

The rating value calculation means 5 are realized by specifically, the CPU of the information processing device which operates according to a program. The rating value calculation means 5 have a function to calculate a conditional probability that the query data matches the given data at a degree that is equal to or greater than the matching degree when the inputted query data is observed (when the query data is inputted by the input means 1). Namely, the rating value calculation means 5 calculate a probability (conditional probability) that a degree at which the inputted query data matches the given data is equal to or greater than the matching degree calculated by the matching degree calculation means. Specifically, the rating value calculation means 5 calculate the degree of matching between the feature quantity observed (calculated) according to the occurrence distributions stored by the occurrence distribution storage means 4 and the feature quantity of the query data, calculate a probability that the calculated degree of matching is equal to or greater than the matching degree, and take it as a first rating value. Namely, the rating value calculation means 5 calculate a probability that the degree of matching between the feature quantity of the query data and the feature quantity calculated based on the occurrence distributions is equal to or greater than the degree of matching between the query data calculated by the matching degree calculation means 3 and the template data as a probability that the query data randomly matches the given data and take it the first rating value.

The determination means 6 is realized by specifically, the CPU of the information processing device which operates according to a program. The determination means 6 have a function to determine whether or not the query data is the data to specify a person that is the same as the person specified by the template data based on the first rating value. For example, when the first rating value is smaller than a predetermined threshold value, the determination means 6 determine that it is data by which the persons can be specified as identical. Namely, the determination means 6 identifies whether or not the input data is the biometric information on the registrant that is stored as the template by comparing the first rating value with the predetermined threshold value.

The output means 7 have a function to output a result determined by the determination means 6. The output means 7 are realized by for example, an indication device such as a display device or the like and display the result determined by the determination means 6 according to an instruction of the determination means 6.

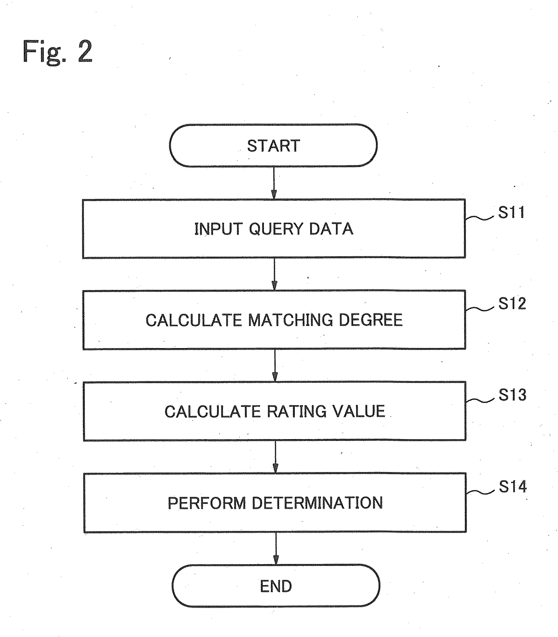

Next, the operation of the biometric authentication system according to the exemplary embodiment will be described with reference to a flowchart shown in Fig. 2 and Fig. 1. Fig. 2 is a flowchart showing an example of the operation of the biometric authentication system.

In order to perform biometric authentication, the user operates the input means 1 that are realized by an input device such as a fingerprint sensor or the like to input the biometric information (for example, fingerprint data). After this, the input means 1 input the biometric information as the query data that is the query target which is used for determining whether or not it is the data to specify a person that is the same as the person specified by the data registered as the template according to the user's operation (step S11).

Next, the matching degree calculation means 3 calculate the matching degree indicating the degree of matching between the inputted query data and the template data recorded in the template storage means 2 (step S12).

Next, when the inputted query data is observed, the rating value calculation means 5 calculate a conditional probability that the query data matches the given data at a degree that is equal to or greater than the matching degree as a probability that the observed feature quantity according to the occurrence distributions stored in the occurrence distribution storage means 4 matches the feature quantity of the query data at a degree that is equal to or greater than the matching degree and take it as the first rating value (step S13). Namely, the rating value calculation means 5 calculate a probability that the degree of matching between the feature quantity of the query data and the feature quantity calculated based on the occurrence distributions is equal to or greater than the degree of matching between the query data calculated by the matching degree calculation means 3 and the template data as a probability that the query data randomly matches the given data and take it as the first rating value.

Next, the determination means 6 determine whether or not the query data is the data to specify a person that is the same as the person specified by the template data based on the first rating value (step S14). For example, when the first rating value is smaller than the predetermined threshold value, the determination means 6 determine that it is data by which the persons can be specified as identical.

Next, the output means 7 output a result determined by the determination means 6. For example, the output means 7 are realized by an indication device such as a display device or the like and display the result determined by the determination means 6 according to an instruction of the determination means 6.

As mentioned above, in the exemplary embodiment, even when the attacker performs the attack by selectively using the query data in which data of a set other than the set of the biometric information is included, the authentication which can guarantee the FMR can be performed in a practical processing time.

The reason for this is that in this exemplary embodiment, when it is assumed that the feature quantity of the given data occurs according to the occurrence distributions stored by the occurrence distribution storage means 4, a probability that the query data randomly matches the given data at a degree that is equal to or greater than the matching degree between the query data and the template data is calculated as the conditional probability in a case in which the query data is observed and this random match probability is taken as the matching rating value.

Further, the reason for this is that even when the attacker performs the attack by selectively using the query data by which the match easily occurs, because it is handled as the conditional probability in a case in which the selected query data is observed, easiness of matching of the query data had been taken into consideration in the calculation of the conditional probability.

Moreover, in the exemplary embodiment, when the conditional probability in a case in which the query data is observed is calculated, because the observed data is used as the query data without changing it, the assumption is not used for the query data. Therefore, even when the query data is selected from a set other than the set of the biometric information and inputted, it can appropriately operate.

Furthermore, in the exemplary embodiment, it is enough to calculate only one probability value. It is not necessary to perform many checking processes unlike the method described in non-patent document 7. Therefore, the authentication can be performed in a practical processing time.

Exemplary embodiment 2

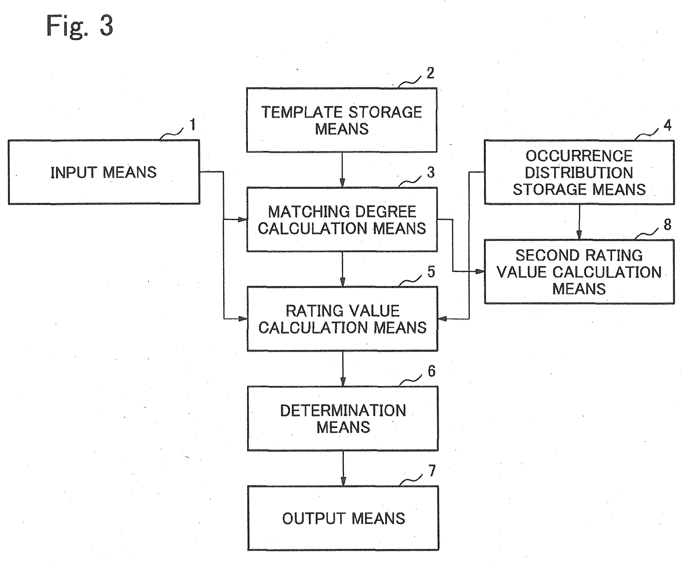

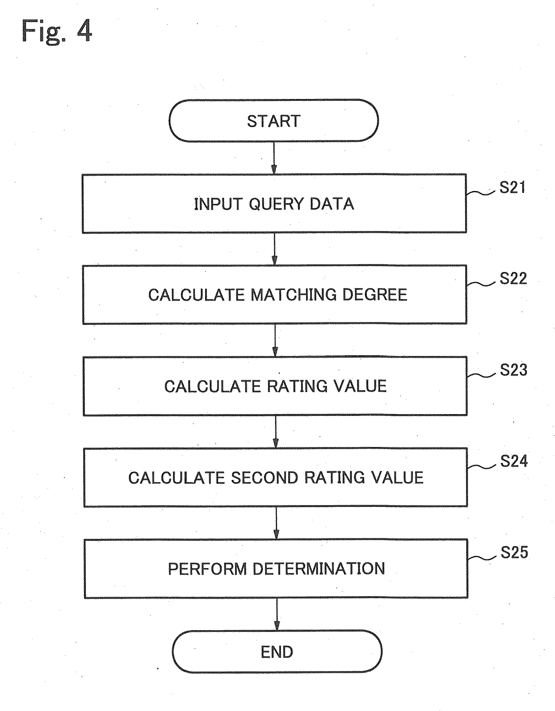

Next, a second exemplary embodiment of a biometric authentication system according to the present invention will be described with reference to the drawing. Fig. 3 is a block diagram showing an example of the configuration of the biometric authentication system according to the second exemplary embodiment. Fig. 4 is a flowchart showing an example of the operation of the biometric authentication system according to the second exemplary embodiment.

Referring to Fig. 3 and Fig. 4, the biometric authentication system according to the second exemplary embodiment of the present invention includes second rating value calculation means 8 in addition to the configuration of the first exemplary embodiment. This is a difference between the first exemplary embodiment and the second exemplary embodiment. The operation of the determination means 6 in the biometric authentication system according to the second exemplary embodiment is different from the operation of the determination means 6 in the biometric authentication system according to the first exemplary embodiment.

The second rating value calculation means 8 are realized by specifically, the CPU of the information processing device which operates according to a program. The second rating value calculation means 8 have a function to calculate a conditional probability that the template data matches the given data at a degree that is equal to or greater than a first matching degree when the template data is observed (when the template data is inputted according to the input of the query data). Namely, the second rating value calculation means 8 calculates a probability (conditional probability) that a degree at which the template data matches the given data is equal to or greater than the matching degree calculated by the matching degree calculation means. Specifically, the second rating value calculation means 8 calculate the degree of matching between the feature quantity observed (calculated) according to the occurrence distributions stored in the occurrence distribution storage means 4 and the feature quantity of the template data, calculate a probability that the calculated matching degree is equal to or greater than the first matching degree, and take it as a second rating value. Namely, the second rating value calculation means 8 calculate a probability that the degree of matching between the feature quantity of the template data and the feature quantity calculated based on the occurrence distributions is equal to or greater than the degree of matching between the query data calculated by the matching degree calculation means 3 and the template data as the probability that the template data randomly matches the given data and take it as the second rating value.

In the second exemplary embodiment, the determination means 6 have a function to determine whether or not the query data is the data to specify a person that is the same as the person specified by the template data based on both the first rating value and the second rating value. For example, when the first rating value and the second rating value are smaller than the predetermined threshold value, the determination means 6 determine that it is the data by which the persons can be specified as identical.

Next, an effect of the second exemplary embodiment of the biometric authentication system according to the present invention will be described. In the exemplary embodiment, the second rating value calculation means 8 calculate a probability that the template data randomly matches the given data as the second rating value. The determination means 6 determine whether or not the query data is the data to specify a person that is the same as the person specified by the template data based on the probability that the template data randomly matches the given data in addition to the first rating value. Therefore, in the exemplary embodiment, even when the attacker performs the attack by which data that easily matches the template data is registered as the template, the FMR can be guaranteed.

Exemplary embodiment 3

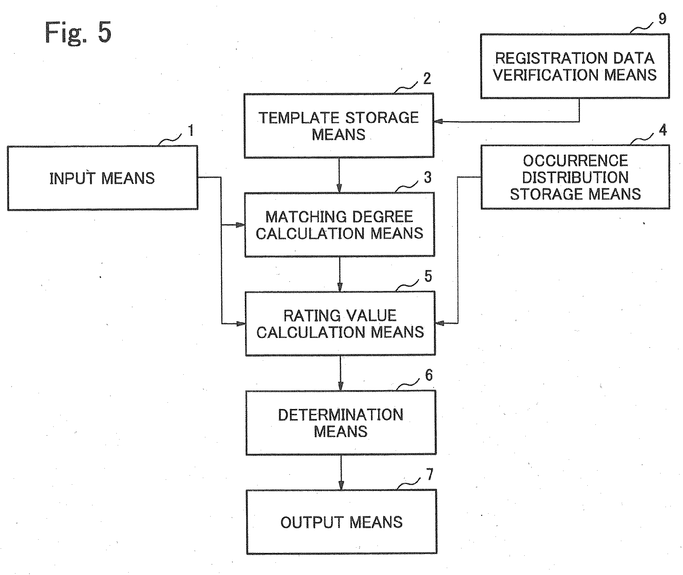

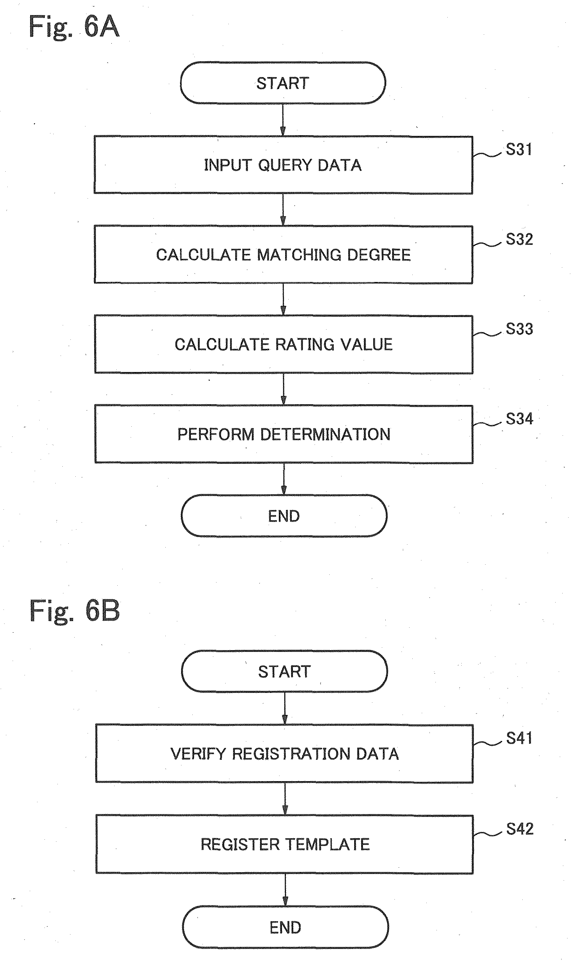

Next, a third exemplary embodiment of a biometric authentication system according to the present invention will be described with reference to the drawing. Fig. 5 is a block diagram showing an example of a configuration of the biometric authentication system according to the third exemplary embodiment. Fig. 6A is a flowchart showing an example of the operation of the biometric authentication system according to the third exemplary embodiment at the time of authentication. Fig. 6B is a flowchart showing an example of the operation of the biometric authentication system according to the third exemplary embodiment at the time of registration.

Referring to Fig. 5, Fig. 6A, and Fig. 6B, the biometric authentication system according to the third exemplary embodiment of the present invention includes registration data verification means 9 in addition to the configuration of the first exemplary embodiment. This is a difference between the first exemplary embodiment and the third exemplary embodiment.

The registration data verification means 9 are realized by specifically, the CPU of the information processing device which operates according to a program. The registration data verification means 9 have a function to verify whether or not the data registered as the template is qualified when the template is recorded and register it to the template storage means 2 only when it has verified that the data is qualified.

Next, an effect of the third exemplary embodiment of the biometric authentication system according to the present invention will be described. In the first exemplary embodiment, it is assumed that the biometric information is correctly registered in the template storage means 2 and whereby, even when the attacker selects the query data from a set other than the set of the biometric information and performs the attack by using it, the FMR can be guaranteed. In this exemplary embodiment, the registration data verification means 9 verify the data registered as the template and register it to the template storage means 2 only when it has verified that the data is qualified. Accordingly, in this exemplary embodiment, it is guaranteed that the above-mentioned assumption is true and the FMR can be more surely guaranteed. Further, in this exemplary embodiment, the second rating value calculation means 8 described in the second exemplary embodiment may be included.

[Example 1]

Next, the operation of the biometric authentication system according to the present invention will be described by using a specific example. This example corresponds to the first exemplary embodiment of the present invention.

In this example, a case in which the present invention is applied to the biometric authentication system which determines whether or not a person is the registrant by using a fingerprint will be explained as an example. In the biometric authentication system of this example, fingerprint data detected by a fingerprint sensor is inputted, it is determined whether or not the inputted fingerprint data and the fingerprint data recorded as the template are of the same person, and whereby, it is determined whether or not a person is the registrant.

The fingerprint is a protuberant line pattern on a skin that is called ridge lines and appears on fingertips. Each person has a unique fingerprint pattern and it does not change through life. Therefore, it is used for personal identification.

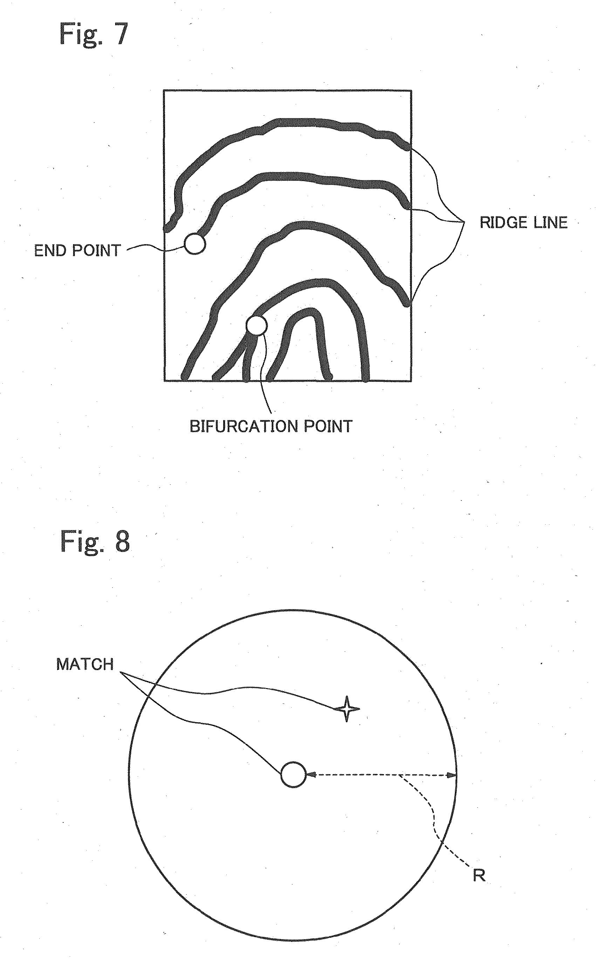

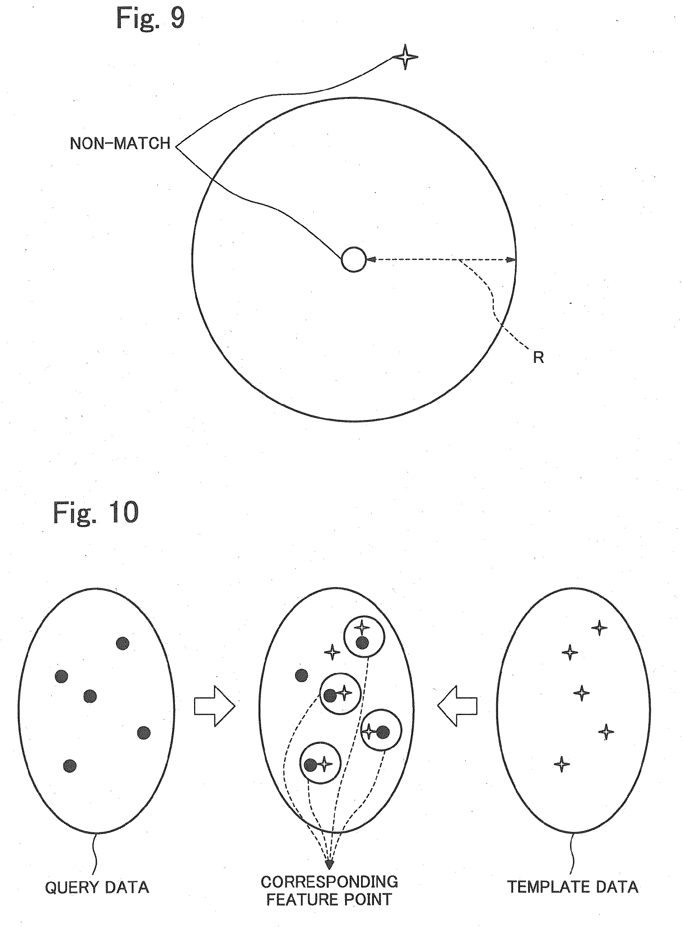

As a method for examining a degree of matching between two fingerprints, a method called minutiae is used in which comparison of the feature points such as an end point and a bifurcation point of the ridge line as shown in Fig. 7 is performed. As an example of a matching degree calculation method using the feature point, a method in which comparison of the positions of the feature points of two fingerprint data is performed, if a position difference between two feature points is equal to or smaller than R, the two feature points are taken as a corresponding feature point (Fig. 8) and if a position difference between two feature points is greater than R, the two feature points are taken as a non-corresponding feature point (Fig. 9), and the number of the corresponding feature points is taken as the matching degree is used.

In this example, as the input means 1, the fingerprint sensor having a function to detect the feature point is used. In order to be certified, when a user puts his finger on the fingerprint sensor, the input means 1 read a fingerprint image, extract the feature point from the read fingerprint image, and create the query data in which the position of the feature point is taken as the feature quantity.

Here, it is assumed that the registrant's fingerprint data is registered in the template storage means 2 as the template data in which the position of the feature point is taken as the feature quantity by the system administrator or the like in advance. Further, for example, an arbitrarily storage medium such as an IC card, a nonvolatile memory, a hard disk, or the like can be used for the template storage means 2.

When the input means 1 create the query data, as shown in Fig. 10, the matching degree calculation means 3 compare the feature point of the query data with the feature point of the template data stored in the template storage means 2, examine the corresponding feature point, and obtain the number of the corresponding feature points as the first matching degree.

For example, when it is assumed that there are Ns feature points in the query data, there are Nt feature points in the template data, and there are M feature points that meet a condition in which the position difference between the feature points in the query data and the feature points in the template data is R or less among all the feature points, the matching degree calculation means 3 calculate the degree M of matching (matching degree M) between this query data and the template data.

Here, in the authentication system in which it is determined whether or not the both data are identical to each other by comparing a value itself of the matching degree M with the threshold value as assumed in non-patent document 4, when the data having a huge number of feature points is used as the query data, it will be determined with a high probability that the both data are identical to each other as described in non-patent document 4. Therefore, in the authentication system assumed in non-patent document 4, the attacker can increase the FMR by selecting the data having a huge number of feature points and performing the attack.

Accordingly, in this example, the matching degree calculation means 3 calculate a probability that the matching degree higher than the matching degree M is randomly obtained when the query data is compared with the arbitrarily data instead of comparing the value itself of the matching degree M with the threshold value and take the calculated probability as the rating value.

The occurrence distribution storage means 4 stores the occurrence distributions of the feature quantity of the biometric information. Further, for example, an arbitrarily storage medium such as a nonvolatile memory, a hard disk device, or the like can be used for the occurrence distribution storage means 4.

In this example, because the position of the feature point is taken as the feature quantity, the occurrence distribution storage means 4 stores the occurrence distributions of the number of the feature points and the occurrence distributions of the coordinate values (x-coordinate value and Y-coordinate value) of the feature point. For example, it is assumed that the number of the feature points of a fingerprint follows a normal distribution having a predetermined average value and a predetermined dispersion, and the positions of the feature points are uniformly distributed in a finger. In this case, the occurrence distribution storage means 4 store a normal distribution $p_N(x)$ having an average $\mu_N$ and a dispersion $\sigma_N$ represented by an equation (1) as the number of the feature points. Further, the occurrence distribution storage means 4 store a uniform distribution $u_X(x)$ corresponding to a width ($Minx$ to $Max_x$) of the finger that is represented by an equation (2) as the X-coordinate value. Further, the occurrence distribution storage means 4 store a uniform distribution $u_Y(x)$ corresponding to a height ($Min_Y$ to $Max_Y$) of the finger that is represented by an equation (3) as the Y-coordinate value.

[Equation 1]

$$p_N(x) = \frac{1}{\sqrt{2\pi}\sigma_N} \exp\left(-\frac{(x-\mu_N)^2}{2\sigma^2{}_N}\right) \cdots (1)$$

[Equation 2]

$$u_X(x) = \frac{1}{Max_X - Min_X} \cdots (2)$$

[Equation 3]

$$u_Y(x) = \frac{1}{Max_Y - Min_Y} \cdots (3)$$

Next, when the inputted query data is observed, when the rating value calculation means 5 examine the degree of matching between the query data and the arbitrarily fingerprint data, it calculates a probability that the matching degree at which more feature points than the matching degree M match each other.

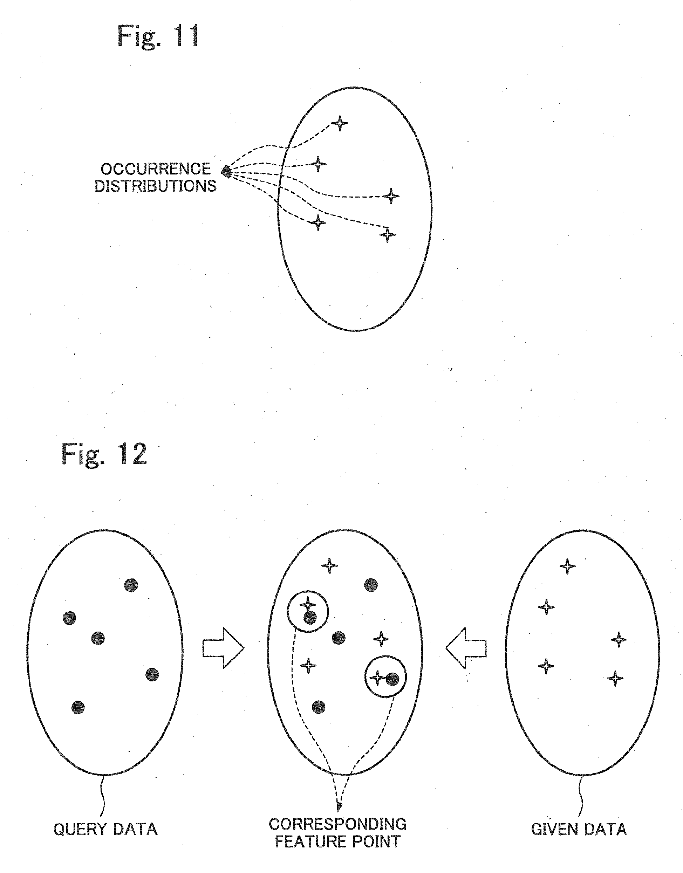

When it is assumed that the feature point is observed according to the occurrence distributions stored in the occurrence distribution storage means 4 (Fig. 11), the rating value calculation means 5 perform the comparison with the given data by comparing the observed feature point with the feature point of the query data (Fig. 12).

When an area of fingerprint is denoted as S, a range of the position of the corresponding feature point against one feature point is within $\pi R^2$. Therefore, the rating value calculation means 5 can calculate a probability p that the feature points observed according to a uniform distribution with respect to both the x-coordinate value and the Y coordinate value are determined as certain one feature point and the corresponding feature point by the following equation (4).

[Equation 4]

$$p = \frac{\pi R^2}{S} \cdots (4)$$

Further, the rating value calculation means 5 can divide a whole fingerprint area into Nc partial areas, each of which has the area of $\pi R^2$, as shown by an equation (5).

[Equation 5]

$$N_c = \left[ \frac{S}{\pi R^2} \right] \cdots (5)$$

Further, the rating value calculation means 5 can calculate a probability $P(N_t, m \mid N = N_s)$ that in a case in which the number N of feature points of the query data is $N_s$, just m feature points among $N_t$ feature points observed according to a uniform distribution which is stored by the occurrence distribution storage means 4 as the x-coordinate value and the Y-coordinate value are included in any one of the partial areas that include $N_s$ feature points of the query data among $N_c$ partial areas and the remaining $(N_t - m)$ feature points are included in any one of $(N_c - N_s)$ partial areas that does not include the feature point of the query data by the following equation (6).

[Equation 6]

$$P(N_t, m | N = N_s) = \frac{\binom{N_s}{m}\binom{N_c - N_s}{N_t - m}}{\binom{N_c}{N_t}} \cdots (6)$$

Because $P(N_t, m | N = N_s)$ is a probability that just m corresponding feature points exist, the rating value calculation means 5 can calculate a probability $P_A(N_t, M | N = N_s)$ that more than M random corresponding feature points exist by the following equation (7).

[Equation 7]

$$P_A(N_t, M | N = N_s) = \sum_{m=M}^{N_s} P(N_t, m | N = N_s) \cdots (7)$$

Because the number of feature points is observed according to the distribution indicated by the equation (1) stored by the occurrence distribution storage means 4, the rating value calculation means 5 can calculate an expected value $ACP(M | N = N_s)$ of a probability that the number of random corresponding feature points is equal to or greater than M in a case in which the number N of the feature points of the query data is N by the following equation (8).

[Equation 8]

$$ACP(M | N = N_s) = \int P_A(x, M | N = N_s) p_N(x) dx \cdots (8)$$

The determination means 6 compare the random match probability $ACP(M | N = N_s)$ with a predetermined threshold value and determine that fingerprints are of the same person because of no random matching when the random match probability is smaller than the predetermined threshold value. Further, when the random match probability is equal to or greater than the predetermined threshold value, the determination means 6 determine that fingerprints are not of the same person because of high possibility of a random match. After that, the output means 7 output a result determined by the determination means 6. For example, when the output means 7 are realized by an indication device such as a display device or the like, the output means 7 display the result obtained by the determination means 6.

Further, because the random match probability $ACP(M | N = N_s)$ is a probability that the inputted data randomly matches the given data when a check is performed, it is a value directly indicating the FMR. Therefore, a value of the FMR allowed in the biometric authentication system or a value obtained by multiplying the FMR allowed in the biometric authentication system by a safety factor smaller than 1 can be used for the predetermined threshold value.

For example, in a case in which when the attacker selects data having a huge number of feature points with which usually, many corresponding feature points are generated and performs the attack as shown in non-patent document 4, if the $N_s$ is greatly increased, a probability represented by the equation (6) that the number of the corresponding feature points is just m tends to become high or it is necessary to calculate a sum of many terms in the mathematical expression of the equation (7). Therefore, as a result, the random match probability $ACP(M | N = N_s)$ represented by the equation (8) becomes high and the determination means 6 determine that a person is not the registrant.

On the other hand, when personal data having many feature points is used as the query data, the $N_s$ is increased. However, because the both data are of the same person, the M is increased according to the increase of the $N_s$. Therefore, the number of terms used for calculating a sum in the mathematical expression of the equation (7) decreases and the random match probability $ACP(M | N = N_s)$ represented by the equation (8) does not become so high. Therefore, an error in which the registrant is determined as tho non-registrant when using the registrant's query data scarcely occurs.

Further, in this example, it is not assumed that the query data follows the occurrence distributions of the biometric information. The random match probability is calculated as the conditional probability in a case in which the inputted query data is observed. Therefore, in the biometric authentication system in this example, even when the attacker selects the query data from a set other than the set of the biometric information, the random match probability can be correctly calculated.

In this example, as the conditional probability in a case in which the inputted query data is observed, the probability that the query data randomly matches the given data at a degree that is equal to or greater than the matching degree between the query data and the template data is calculated. Here, it is not allowed that the query data and the template data are changed to each other and as the conditional probability in a case in which the template data is observed, a probability that the template data randomly matches the given data at a degree that is equal to or greater than the matching degree between the query data and the template data is calculated. This is because it is based on the premise that the template data is managed by the biometric authentication system and the biometric information is correctly registered as the template data but it is expected that the data is selected from a set other than the set of the biometric information because the attacker can freely select and input the data with respect to the query data. Therefore, it is important to perform the calculation as the conditional probability in a case in which the inputted query data is observed.

In the explanation of this example, although the coordinate value of the position of the feature point on the fingerprint is used as the feature quantity, another feature quantity such as a direction of the ridge line with which the feature point contacts, curvature of the ridge line with which the feature point contacts, a type of the feature point such as the end point, the bifurcation point, or the like can be similarly used as the feature quantity in addition to the position if the occurrence distributions or the occurrence probability can be calculated in advance.

In this example, the matching degree is calculated based on whether or not the distance between the feature points is smaller than or equal to a predetermined distance. Therefore, whether or not the feature points are located very close to each other or whether they are separated from each other to some extent although the distance is smaller than or equal to the predetermined distance is not used for the determination. In consideration of the above-mentioned matters, by using a calculation method described in for example, clause 4.2 of non-patent document 2, the random match probability can be calculated with respect to the distance between the feature points.

Further, in this example, as the occurrence distributions of the number of feature points, a normal distribution is used. However, a general probability distribution such as a chi-square distribution, t distribution, or the like can be used according to an object. Not only a continuous distribution but also a non-continuous distribution such as a binomial distribution or the like can be used. Similarly, although a uniform distribution is used as the occurrence distributions of the coordinate value, another general probability distribution can be used according to the object. For example, in a case in which there are many feature points at the center of the finger and there are a few feature points at circumference, it can be assumed that the position of the feature point follows a two-dimensional normal distribution having an average that is the center of the finger and a predetermined dispersion. Further, because a shape of the finger is not a precise circle and approximately elliptical, a two-dimensional normal distribution having a horizontal dispersion and a vertical dispersion that have different values from each other.

The occurrence distributions of the feature quantity can be theoretically calculated from physical constraints of target biometric information or the like in advance or it can be estimated through actual measurement of data and used. Further, it can be handled as a distribution represented by the equation and even when it cannot be represented by the equation, the relation between the feature quantity and an appearance frequency can be determined as a numerical table.

Further, in this example, although the matching degree calculation means 3 calculate the number of the corresponding feature points of which the positions (coordinate values)of the feature points correspond to each other as the matching degree. However, if the occurrence distributions of the feature quantity can be calculated in advance and the matching degree of the feature quantity can be determined, the arbitrary feature quantity and the arbitrary matching degree can be used.

For example, the occurrence distributions of a pixel value is calculated in advance by directly using the pixel value of a fingerprint image and when a difference between the pixel value of the query data and the pixel value of the template data is equal to or smaller than the predetermined difference with respect to the same pixel, the those pixels are determined as a matching pixel. Further, the number of matching pixels can be used as the degree of matching between the query data and the template data or a total value of the difference between the pixel values of the same pixel with respect to the all the pixels can be used as the degree of matching between the query data and the template data.

Further, in this example, in the calculation, the same fingerprint area S is used for both the query fingerprint and the template fingerprint. However, in order to take into consideration of a position shift that occurs for each input operation of the fingerprint, a check method can be used in which an area in which the fingerprint is taken as the query fingerprint and an area in which the fingerprint is taken as the template fingerprint are calculated and only the common area in which both the query fingerprint and the template fingerprint are included is used for the check.

Further, in this example, the number of the fingerprint feature points of the template data is calculated based on an assumption that it is observed according to the occurrence distributions of the number of feature points stored by the occurrence distribution storage means 4. However, the actual number of feature points of the template data can be used. In this case, it is not necessary to calculate the expected value with respect to the number of the feature points as shown in the equation (8) and it is enough to use the value calculated by using the equation (7) as the matching rating value.

Further, in this example, although the fingerprint sensor having a function to detect the feature point is used as the input device, a configuration in which an input device having only a pure input function like a camera is used and feature extraction means that separately extract the feature from the image inputted from the input device are included may be used. Further, a configuration in which the information processing device including the biometric authentication system is connected with another device via a network and receives data inputted from the another device via the network may be used.

Further, in this example, although a configuration in which the determination result is displayed in the display device as the output means 7 is used, for example, a configuration in which a signal including the determination result is sent to an electronic lock of a door can be used and this configuration can be applied to an entrance/exit management system using a door. Further, a configuration in which by transmitting the authentication result from a client PC to an application server via the network or the like, an output result can be used in an arbitrary scene in which the person's authentication is required can be used.

Further, in this example, although the fingerprint is used as the biometric information used for the authentication, if each person has a unique feature, the occurrence distributions of the feature quantity can be calculated in advance, and the matching degree can be calculated, arbitrary biometric information such as for example, a face image or an iris, a vein, a shape of palm, or the like can be used.

[Example 2]

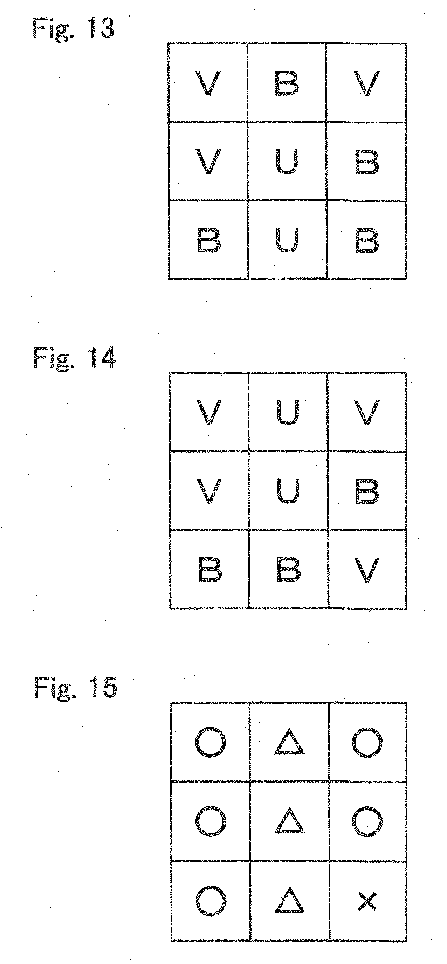

Next, a second example will be described. This example corresponds to the second exemplary embodiment of the present invention. This example includes the second rating value calculation means 8 in addition to the configuration of the first exemplary embodiment. This is a difference between this example and the first exemplary embodiment. In this example, a case in which the present invention is applied to the biometric authentication system which determines whether or not a person is the registrant by using the finger vein will be explained as an example. With respect to the feature quantity of the finger vein used in this example, each pixel is classified into three kinds, a vein pixel (V), a background area (B), and an ambiguous area (U) like non-patent document 5 (Fig. 13 and Fig. 14). Hereinafter, for ease of explanation, it is assumed that a vein pattern is composed of 3 x 3 pixels.

The occurrence distribution storage means 4 record a probability that each pixel is classified into each area (category). A probability (PV) that the pixel is classified as the vein pixel, a probability (PB) that the pixel is classified as the background pixel, and a probability (PU = (1 - PV - PB)) that the pixel is classified as the ambiguous pixel can be made equal to each other with respect to each pixel and a different value can be assigned to each pixel. Here, for ease of explanation, it is assumed that PV = PB = PU = 1/3 with respect to all the pixels.

In this example, as the input means 1, the sensor having a function to detect the finger vein is used. In order to be certified, when a user puts his finger on the sensor, the input means 1 detect and input the finger vein, classify each pixel into three kinds, the vein pixel (V), the background area (B), and the ambiguous area (U), and take it as query data VS (Fig. 13).

Here, it is assumed that the template storage means 2 record template data VT (Fig. 14) in which each pixel is classified into three kinds, the vein pixel (V), the background area (B), and the ambiguous area (U). These template data VT are registered by for example, the system administrator or the like in advance.

Next, the matching degree calculation means 3 calculate the degree of matching between the query data VS and the template data VT. The matching degree calculation means 3 use the number of pixels of which the vein area and the background area other than the ambiguous area are classified to the same area as the matching degree. The matching degree calculation means 3 perform labeling for each pixel of the query data VS (Fig. 13) and the template data VT (Fig. 14). When the both pixels are classified as the vein area or when the both pixels are classified as the background area, the both pixels are labeled as "o", when one pixel is classified as the vein area and the other pixel is classified as the background area, in other words, when both the pixels are non-match pixels, these are labeled as "x", and when the both pixels are the pixels that are not compared with each other because one of the both pixels is classified as the ambiguous area, the both pixels are labeled as "Δ" (Fig. 15). Specifically, the matching degree calculation means 3 performs a process for determining what is an image. The matching degree calculation means 3 take the number M of pixels that are not labeled as "x" as the first matching degree.

Next, when the query data VS is observed, the first rating value calculation means 5 calculate a conditional probability $PL(V_T, M \mid V_S)$ that the query data VS randomly matches the given data at a degree that is equal to or greater than the matching degree M between the query data VS and the template data VT and take it the first rating value.

For example, it is assumed that the number of pixels that are not the ambiguous pixels is NsR and the number of the ambiguous pixels is NsU among all NA = 9 pixels, of the query data VS. When the pixel that is not the ambiguous pixel of the query data is compared with the pixel of the given data, a probability of non-match is 1/3. Further, with respect to the ambiguous pixel, the non-match does not occurs. Therefore, a probability $P(m \mid N_s^R)$ that the number of pixels labeled as "x" (with respect to the pixel that is not the ambiguous pixel of the query data, the non-match occurs) is just m can be calculated by the following equation (9).

[Equation 9]

$$P(m \mid N_s^R) = {}_{N_s^R}C_m \left(\frac{1}{3}\right)^m \left(\frac{2}{3}\right)^{(N_s^R - m)} \cdots (9)$$

Therefore, when the query data VS is observed, the conditional probability $P1(V_T, M \mid V_s)$ that the query data VS randomly matches the given data at a degree that is equal to or greater than the matching degree M between the query data VS and the template data VT can be calculated by the following equation (10). This is because, the match of k pixels means that k pixels are not labeled as "x" and (NA-k) pixels are labeled as "x".

[Equation 10]

$$P_1(V_T, M \mid V_s) = \sum_{k=M}^{N_A} P(N_A - k \mid N_s^R) \cdots (10)$$

Non-patent document 7 points out that when the method for authenticating the vein pattern described in non-patent document 5 is used, if the attacker uses the query data of which all the pixels are classified as the ambiguous area, a person is always certified as the registrant. In the method for authenticating the vein pattern described in non-patent document 5, a percentage of the pixels which are not labeled as "x" is used as the matching degree. Therefore, a calculation formula for this is different from the equation for calculating the matching degree used in this example. However, even in the matching degree used in this example, when the number of the ambiguous areas is large, the matching degree becomes high and when all the pixels are classified as the ambiguous area, the matching degree becomes maximum. This is the same as the above-mentioned authentication method.
However, in this example, the number of pixels that are not the non-match pixels is not used directly and it is used as the random match probability in a case in which the comparison with the given data is performed. Therefore, when the number of the ambiguous areas of the query data is large, the $N_sR$ becomes small, the probability calculated by the equation (9) becomes high, and the probability calculated by the equation (10) becomes high. Therefore, even when the attacker selects the query data in which all pixels are classified as the ambiguous area, a person is not determined as the registrant.
Next, when the template data VT is observed, the second rating value calculation means calculate a conditional probability $P2(V_s, M \mid V_t)$ that the template data VT randomly matches the given data at a degree that is equal to or greater than the matching degree M between the query data VS and the template data VT and take it as the second rating value. Further, when the query data and the template data are replaced with each other in the calculation formula of the $P1 (V_T, M \mid V_s)$, the calculation formula for calculating the $P2(V_S, M \mid V_T)$ is obtained. Therefore, the explanation of the calculation formula of the $P2(V_S, M \mid V_T)$ will be omitted.
Next, when both the first rating value and the second rating value are smaller than the predetermined threshold value, the determination means 6 determine that a person is the registrant and when either the first rating value or the second rating value is equal to or greater than the predetermined threshold value, it determine that a person is not the registrant.
The same threshold value can be used for both cases of the comparison with the first rating value and the comparison with the second rating value but the different threshold value also can be used for them. In particular, because the attacker can easily perform the attack at the time of query compared to at the time of template registration, it is desirable that the threshold value compared with the first rating value is more severely set than the threshold value compared with the second rating value. The determination means 6 can use another determination method in which the determination of the first rating value and the determination of the second rating value are individually performed and by using two determination results, the final determination result is obtained. The determination means 6 can also use a determination method in which the first rating value and the second rating value are substituted in a predetermined equation for example, an equation in which the first rating value and the second rating value are multiplied by a predetermined coefficient and added, the obtained value is compared with the predetermined threshold value, and determination is performed.

The second rating value calculation means 8 of this example can be additionally used not only in a case of the vein authentication described in this example but also in a case of the authentication using an arbitrary biometric information such as a face image, an iris, a vein, a shape of palm, or the like that is described in the first example.

Next, an effect of the biometric authentication system of this example will be described. In the first example, it is assumed that the biometric information is correctly registered as the template data and under this assumption, the FMR can be guaranteed even when the attacker selects the query data from a set other than the set of the biometric information and performs the attack. However, in the biometric authentication system in the first example, it is not assumed that the attacker registers information other than the biometric information as the template data and in this case, the FMR cannot be guaranteed.

In this example, a configuration in which a determination is performed by further using the probability that the template randomly matches the given data is used in addition to the configuration of the first example. Therefore, the FMR can be guaranteed against the attack by which the attacker registers the data that easily matches the template.

[Example 3]

Next, a third example will be described. This example corresponds to the third exemplary embodiment of the present invention. A biometric authentication system in this example includes the registration data verification means 9 in addition to the configuration of the first exemplary embodiment. This is a difference between this example and the first exemplary embodiment.

When registration data verification means 9 have a function to verify whether or not data registered as the template is qualified when it is recorded as the template and register the data to the template storage means 2 only when it is verified as qualified.

In the biometric authentication system of this example, the biometric authentication system can be operated so that for example, when a user performs the operation of inputting an ID card such as a driver's license, the registration is not accepted before the registration data verification means 9 confirm the user as an authentic user by using the ID number. The registration data verification means 9 can be configured so that it is determined whether or not information inputted to an input device for registration is authentic biometric information by an optical, electrical, or magnetic measurement device and only when the inputted biometric information is determined as authentic, it is registered as the template.

Next, an effect of the biometric authentication system of this example will be described. In this example, only when the biometric information is verified by the registration data verification means 9 as qualified, it is registered in the template storage means 2 as the template in addition to the first example. In the first exemplary embodiment, it is assumed that the biometric information is correctly registered in the template storage means 2 and under this assumption, the FMR can be guaranteed even when the attacker selects the query data from a set other than the set of the biometric information and performs the attack. In this example, the registration data verification means 9 verify the data registered as the template and whereby, the above-mentioned assumption can be guaranteed and the FMR can be more certainly guaranteed.

From the above-mentioned description, we can say the present invention has the following feature. The biometric authentication system according to the present invention includes the input means which input the query data, the template storage means which register the template data, the occurrence distribution storage means which store the occurrence distributions of the feature quantity of the biometric information, the matching degree calculation means which compare the matching data with the template data and calculate the matching degree, random match probability calculation means which calculate the random match probability that arbitrary biometric information randomly matches the query data as the conditional probability that the match with the given data occurs when the query data is observed as the probability that the degree of matching with the observed query data is equal to or greater than the matching degree when the feature quantity of the given data occurs according to the occurrence distributions stored by the occurrence distribution storage means, and the determination means which take the random match probability as the matching rating value and determine whether or not both the query data and the template data are of the same person by comparing the matching rating value with the threshold value determined in advance.

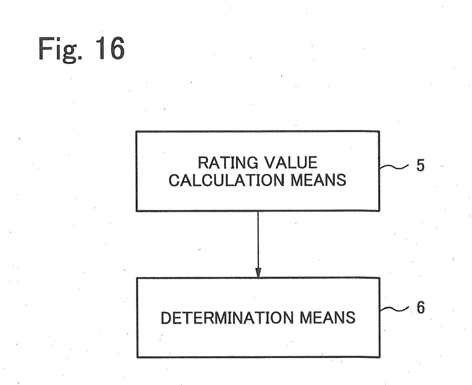

Next, a minimum configuration of the biometric authentication system according to the present invention will be described. Fig. 16 is a block diagram showing an example of the minimum configuration of the biometric authentication system. As shown in Fig. 16, the biometric authentication system includes the rating value calculation means 5 and the determination means 6.

In the biometric authentication system with the minimum configuration shown in Fig. 16, the rating value calculation means 5 calculate a probability that the inputted data randomly matches the given data and take it as the rating value. The determination means 6 determine whether or not the inputted data is identified as the template data indicating the biometric information on the registrant that is stored in advance based on the rating value calculated by the rating value calculation means 5.

Accordingly, when the biometric authentication system with the minimum configuration is used, even when the attacker selects the query data from a set other than the set of the biometric information and performs the attack, the authentication in which the FMR can be guaranteed can be performed in a practical processing time.

Further, in this exemplary embodiment, the characteristic configurations of the biometric authentication system as shown in the following items (1) to (11) are shown.

(1) The biometric authentication system is characterized by including the rating value calculation means (for example, it is realized by the rating value calculation means 5) which calculate a probability that the inputted data (for example, input data) randomly matches the given data and take it as the rating value and the determination means (for example, it is realized by the determination means 6) which determine whether or not the inputted data is identified as the template data indicating the biometric information on the registrant that is stored in advance (for example, it is realized by the template storage means 2) based on the rating value calculated by the rating value calculation means.

(2) The biometric authentication system may have a configuration in which the matching degree calculation means (for example, it is realized by the matching degree calculation means 3) which calculate the degree of matching between the inputted data and the template data is included, the rating value calculation means calculate a probability that the degree of matching between the feature quantity based on the occurrence distributions of the feature quantity included in the biometric information stored in advance (for example, it is realized by the occurrence distribution storage means 4) and the feature quantity of the inputted data is equal to or greater than the matching degree calculated by the matching degree calculation means and obtain it as the rating value, and the determination means determine whether or not the inputted data is identified as the template data by comparing the rating value calculated by the rating value calculation means and the predetermined threshold value.

(3) The biometric authentication system is characterized by including the occurrence distribution storage means (for example, it is realized by the occurrence distribution storage means 4) which store the occurrence distributions of the feature quantity included in the biometric information, the conditional probability calculation means (for example, it is realized by the rating value calculation means 5) which calculate a first conditional probability (for example, first rating value) that the input data randomly matches the given data as the probability that the degree of matching between the feature quantity calculated according to the occurrence distributions stored by the occurrence distribution storage means and the feature quantity of the inputted data is equal to or greater than the degree of matching between the inputted data and the template data indicating the biometric information on the registrant stored in advance (for example, it is realized by the template storage means 2) under a condition in which the input data has been inputted, and the identification means (for example, it is realized by the determination means 6) which identify whether or not the input data is the registrant's biometric information stored as the template by comparing the first conditional probability calculated by the conditional probability calculation means with the predetermined threshold value.

(4) The biometric authentication system may be configured so that the identification means use any one of a value of the false acceptance rate allowed in the biometric authentication system, a value obtained by multiplying the false acceptance rate by a safety factor that is a predetermined value of less than 1, and a value obtained by substituting the false acceptance rate in a predetermined equation as the threshold value.

(5) The biometric authentication system may have a configuration in which the second conditional probability calculation means (for example, it is realized by the second rating value calculation means 8) which calculate a second conditional probability that the template data randomly matches the given data under a condition in which the template data has been inputted as the probability that the degree of matching between the feature quantity observed according to the occurrence distributions and the feature quantity of the template data is equal to or greater than the degree of matching between the input data and the template data in addition to the first conditional probability is included and the identification means perform the identification by using both the first conditional probability and the second conditional probability (for example, the second rating value) calculated by the second conditional probability calculation means.

(6) The biometric authentication system may have a configuration in which the registration data verification means (for example, it is realized by the registration data verification means 9) which verify that the template is the biometric information at the time of the template data registration is included.

(7) The biometric authentication system may have a configuration in which corresponding feature point number calculation means (for example, it is realized by the matching degree calculation means 3) in which the position of the feature point is used as the feature quantity, a pair of the feature point of the query data and the feature point of the template data that are positioned within the predetermined distance among the feature points of the query data and the template data is taken as the corresponding feature point and the number of the corresponding feature points is calculated as the matching degree is included, and the first conditional probability calculation means calculate a probability that in a case in which the feature point is arranged according to the occurrence distributions, the number of feature points corresponding to the feature points of the query data is greater than the number of the corresponding feature points between the query data and the template data that is calculated by the corresponding feature point number calculation means as the first conditional probability.

(8) The biometric authentication system may be configured so that a fingerprint is used as the biometric information and an end point or a bifurcation point of a fingerprint ridge line is used as the feature point.

(9) The biometric authentication system may be configured so that a vein is used as the biometric information and an end point or a bifurcation point of the vein is used as the feature point.

(10) The biometric authentication system may have a configuration in which corresponding pixel number calculation means (for example, it is realized by the matching degree calculation means 3) in which an image is used as the biometric information, each pixel in the image is classified into a category, the category of each pixel is used as the feature quantity, a pair of the pixel of the query data and the pixel of the template data in which the categories of these pixels have a predetermined relationship among the pixels of the query data and the template data is taken as a corresponding pixel, and the number of the corresponding pixels is calculated as the matching degree is included, and the first conditional probability calculation means calculate a probability that in a case in which the category of each pixel is arranged according to the occurrence distributions, the number of the pixels corresponding to the pixels of the query data is greater than the number of the corresponding pixels between the query data and the template data that is calculated by the corresponding pixel number calculation means as the first conditional probability.

(11) The biometric authentication system may be configured so that a vein is used as the biometric information, a vein area, a background area, and an ambiguous area are used as the category of the pixel, and the corresponding pixel is obtained based on a condition in which a combination of the vein area and the background area is not used as a predetermined relationship between the categories applied to the corresponding pixel.

The invention of the present application has been described with reference to the exemplary embodiment described above. However, the invention of the present application, is not limited to the above-mentioned exemplary embodiment. Various changes in the configuration or details of the invention of the present application that can be understood by those skilled in the art can be made without departing from the scope of the invention of the present application.

This application claims priority from Japanese Patent Application No. 2009-208042, filed on September 9th, 2009, the disclosure of which is hereby incorporated by reference in its entirety.

Industrial applicability

The present invention can be applied to a field of a biometric authentication system which authenticates a user by using biometric information.

Description of symbol

1    input means
2    template storage means
3    matching degree calculation means
4    occurrence distribution storage means
5    rating value calculation means
6    determination means
7    output means
8    second rating value calculation means
9    registration data verification means

**Claims**

1.  A biometric authentication system **characterized by** including

rating value calculation means which calculate a probability that input data randomly matches given data and take it as a rating value and

determination means which determine whether or not the input data is identified as template data indicating biometric information stored in advance based on the rating value calculated by the rating value calculation means.

2. The biometric authentication system described in claim 1 wherein

matching degree calculation means which calculate a degree of matching between the input data and the template data is included,

the rating value calculation means calculate a probability that the degree of matching between the feature quantity based on an occurrence distributions of the feature quantity included in the biometric information stored in advance and the feature quantity of the input data is equal to or greater than a matching degree calculated by the matching degree calculation means and take it as the rating value, and

the determination means determine whether or not the input data is identified as the template data by comparing the rating value calculated by the rating value calculation means with a predetermined threshold value.

3. A biometric authentication system **characterized by** including

occurrence distribution storage means which store an occurrence distributions of a feature quantity included in biometric information,

conditional probability calculation means which calculate a first conditional probability that the input data randomly matches given data as a probability that a degree of matching between the feature quantity calculated according to the occurrence distributions stored by the occurrence distribution storage means and the feature quantity of the inputted data is equal to or greater than the degree of matching between the input data and the template data indicating the biometric information stored in advance under a condition in which the input data has been inputted, and

identification means which identify whether or not the input data is the registrant's biometric information stored as a template by comparing the first conditional probability calculated by the conditional probability calculation means with a predetermined threshold value.

4. The biometric authentication system described in claim 3 wherein the identification means use any one of a value of a false acceptance rate allowed in the biometric authentication system, a value obtained by multiplying the false acceptance rate by a safety factor that is a predetermined value of less than 1, and a value obtained by substituting the false acceptance rate in a predetermined equation and performing a calculation as the threshold value.

5. The biometric authentication system described in claim 3 or claim 4, wherein second conditional probability calculation means which calculate a second conditional probability that the template data randomly matches the given data as a probability that a degree of matching between the feature quantity calculated according to the occurrence distributions and the feature quantity of the template data is equal to or greater than the degree of matching between the input data and the template data under a condition in which the template data has been inputted in addition to the first conditional probability are included and

the identification means perform the identification by using both the first conditional probability and the second conditional probability calculated by the second conditional probability calculation means.

6. The biometric authentication system described in any one of claims 3 to 5 which includes registration data verification means which verify that the template is the biometric information at the time of template data registration.

7. The biometric authentication system described in any one of claims 3 to 6, wherein

corresponding feature point number calculation means in which a position of the feature point is used as the feature quantity, a pair of the feature point of the query data and the feature point of the template data that are positioned within a predetermined distance among the feature points of the query data and the template data is taken as a corresponding feature point, and the number of the corresponding feature points is calculated as the matching degree is included and

the first conditional probability calculation means calculate a probability that in a case in which the feature point is arranged according to the occurrence distributions, the number of feature points corresponding to the feature points of the query data is greater than the number of the corresponding feature points between the query data and the template data that is calculated by the corresponding feature point number calculation means as the first conditional probability.

8. The biometric authentication system described in claim 7 in which a fingerprint is used as the biometric information and an end point or a bifurcation point of a fingerprint ridge line is used as the feature point.

9. The biometric authentication system described in claim 7 in which a vein is used as the biometric information and an end point or a bifurcation point of the vein is used as the feature point.

10. The biometric authentication system described in any one of claims 3 to 6, wherein
    corresponding pixel number calculation means in which an image is used as the biometric information, each pixel in the image is classified into a category, the category of each pixel is used as the feature quantity, a pair of the pixel of the query data and the pixel of the template data in which the categories of these pixels have a predetermined relationship among the pixels of the query data and the template data is taken as a corresponding pixel, and the number of the corresponding pixels is calculated as the matching degree is included, and
    first conditional probability calculation means calculate a probability that in a case in which the category of each pixel is arranged according to the occurrence distributions, the number of the pixels corresponding to the pixels of the query data is greater than the number of the corresponding pixels between the query data and the template data that is calculated by the corresponding pixel number calculation means as the first conditional probability.

11. The biometric authentication system described in claim 10 in which a vein is used as the biometric information, a vein area, a background area, and an ambiguous area are used as the category of the pixel, and the corresponding pixel is obtained based on a condition in which a combination of the vein area and the background area is not used as a predetermined relationship between the categories applied to the corresponding pixel.

12. A biometric authentication method **characterized by** comprising the steps of:

    calculating a probability that input data randomly matches given data and taking it as a rating value and
    determining whether or not the input data is identified as template data indicating biometric information stored in advance based on the calculated rating value.

13. The biometric authentication method described in claim 12 comprising the steps of:

    calculating a degree of matching between the input data and the template data,
    calculating a probability that the degree of matching between a feature quantity based on an occurrence distributions of the feature quantity that is included in the biometric information stored in advance and the feature quantity of the input data is equal to or greater than the calculated matching degree and taking it as a rating value, and
    determining whether or not the input data is identified as the template data by comparing the calculated rating value with a predetermined threshold value.

14. A computer readable non-transitory medium for storing a biometric authentication program that causes a computer to perform
    a rating value calculation process in which a probability that input data randomly matches given data is calculated and it is taken as a rating value and
    a determination process in which it is determined whether or not the input data is identified as template data indicating biometric information stored in advance based on the calculated rating value.

15. The computer readable non-transitory medium for storing a biometric authentication program described in claim 14 that causes a computer to
    perform a matching degree calculation process in which a degree of matching between the input data and the template data is calculated,
    calculate a probability that the degree of matching between the feature quantity based on an occurrence distributions of the feature quantity that is included in the biometric information stored in advance and the feature quantity of the inputted data is equal to or greater than the calculated matching degree and take it as a rating value in a rating value calculation process, and
    perform a process for determining whether or not the input data is identified as the template data by comparing the calculated rating value with a predetermined threshold value in a determination process.

Fig. 1

```
                          ┌─────────────────────┐  2
                          │  TEMPLATE STORAGE   │
                          │       MEANS         │
                          └─────────────────────┘
                                    │
     ┌──────────────────┐  1        ▼              ┌──────────────────┐  4
     │                  │        ┌─────────────────────┐  3   │   OCCURRENCE     │
     │   INPUT MEANS    │────┐   │  MATCHING DEGREE    │      │  DISTRIBUTION    │
     │                  │    │   │  CALCULATION MEANS  │      │  STORAGE MEANS   │
     └──────────────────┘    │   └─────────────────────┘      └──────────────────┘
                             │              │                          │
                             │              ▼                          │
                             │   ┌─────────────────────┐  5            │
                             └──▶│    RATING VALUE     │◀──────────────┘
                                 │  CALCULATION MEANS  │
                                 └─────────────────────┘
                                            │
                                            ▼
                                 ┌─────────────────────┐  6
                                 │    DETERMINATION    │
                                 │       MEANS         │
                                 └─────────────────────┘
                                            │
                                            ▼
                                 ┌─────────────────────┐  7
                                 │    OUTPUT MEANS     │
                                 └─────────────────────┘
```

20

# Fig. 2

```
            ┌─────────────────┐
            │      START      │
            └─────────────────┘
                     │
                     ▼
   ┌───────────────────────────────────┐
   │         INPUT QUERY DATA          │ ⌇ S11
   └───────────────────────────────────┘
                     │
                     ▼
   ┌───────────────────────────────────┐
   │     CALCULATE MATCHING DEGREE     │ ⌇ S12
   └───────────────────────────────────┘
                     │
                     ▼
   ┌───────────────────────────────────┐
   │      CALCULATE RATING VALUE       │ ⌇ S13
   └───────────────────────────────────┘
                     │
                     ▼
   ┌───────────────────────────────────┐
   │       PERFORM DETERMINATION       │ ⌇ S14
   └───────────────────────────────────┘
                     │
                     ▼
            ┌─────────────────┐
            │       END       │
            └─────────────────┘
```

# Fig. 3

```
                          ┌─────────────────────┐ ⌐2
                          │  TEMPLATE STORAGE   │
                          │       MEANS         │
        ⌐1                └─────────────────────┘
┌─────────────────┐                 │                            ┌─────────────────────┐ ⌐4
│                 │                 │                            │    OCCURRENCE       │
│  INPUT MEANS    │                 ▼              ⌐3            │    DISTRIBUTION     │
│                 │       ┌─────────────────────┐                │   STORAGE MEANS     │
└─────────────────┘       │  MATCHING DEGREE    │                └─────────────────────┘
        │                 │ CALCULATION MEANS   │                          │
        │                 └─────────────────────┘                          ▼             ⌐8
        │                           │                            ┌─────────────────────┐
        │                           ▼              ⌐5            │   SECOND RATING     │
        │                 ┌─────────────────────┐                │ VALUE CALCULATION   │
        └────────────────▶│   RATING VALUE      │◀───────────────│       MEANS         │
                          │ CALCULATION MEANS   │                └─────────────────────┘
                          └─────────────────────┘
                                    │
                                    ▼              ⌐6
                          ┌─────────────────────┐
                          │   DETERMINATION     │
                          │       MEANS         │
                          └─────────────────────┘
                                    │
                                    ▼              ⌐7
                          ┌─────────────────────┐
                          │   OUTPUT MEANS      │
                          └─────────────────────┘
```

22

Fig. 4

```
         ┌─────────────────┐
         │      START       │
         └─────────────────┘
                  │
                  ▼
  ┌────────────────────────────────┐
  │       INPUT QUERY DATA          │ ⌐ S21
  └────────────────────────────────┘
                  │
                  ▼
  ┌────────────────────────────────┐
  │   CALCULATE MATCHING DEGREE     │ ⌐ S22
  └────────────────────────────────┘
                  │
                  ▼
  ┌────────────────────────────────┐
  │    CALCULATE RATING VALUE       │ ⌐ S23
  └────────────────────────────────┘
                  │
                  ▼
  ┌────────────────────────────────┐
  │  CALCULATE SECOND RATING VALUE  │ ⌐ S24
  └────────────────────────────────┘
                  │
                  ▼
  ┌────────────────────────────────┐
  │     PERFORM DETERMINATION       │ ⌐ S25
  └────────────────────────────────┘
                  │
                  ▼
         ┌─────────────────┐
         │       END        │
         └─────────────────┘
```

Fig. 5

## Fig. 6A

```
        ( START )
            |
            v
  +---------------------+
  |  INPUT QUERY DATA   |~ S31
  +---------------------+
            |
            v
  +----------------------------+
  | CALCULATE MATCHING DEGREE  |~ S32
  +----------------------------+
            |
            v
  +--------------------------+
  |  CALCULATE RATING VALUE  |~ S33
  +--------------------------+
            |
            v
  +--------------------------+
  |  PERFORM DETERMINATION   |~ S34
  +--------------------------+
            |
            v
        (  END  )
```

## Fig. 6B

```
        ( START )
            |
            v
  +----------------------------+
  | VERIFY REGISTRATION DATA   |~ S41
  +----------------------------+
            |
            v
  +--------------------------+
  |    REGISTER TEMPLATE     |~ S42
  +--------------------------+
            |
            v
        (  END  )
```

## Fig. 7

END POINT

RIDGE LINE

BIFURCATION POINT

## Fig. 8

MATCH

R

Fig. 9

NON-MATCH

R

Fig. 10

QUERY DATA　　　CORRESPONDING　　　TEMPLATE DATA
　　　　　　　　　FEATURE POINT

Fig. 11

OCCURRENCE
DISTRIBUTIONS

Fig. 12

QUERY DATA

CORRESPONDING
FEATURE POINT

GIVEN DATA

Fig. 13

| V | B | V |
|---|---|---|
| V | U | B |
| B | U | B |

Fig. 14

| V | U | V |
|---|---|---|
| V | U | B |
| B | B | V |

Fig. 15

| ○ | △ | ○ |
|---|---|---|
| ○ | △ | ○ |
| ○ | △ | × |

Fig. 16

```
┌─────────────────────────────┐
│      RATING VALUE           │ ～ 5
│   CALCULATION MEANS         │
└─────────────────────────────┘
              │
              ↓
┌─────────────────────────────┐
│    DETERMINATION MEANS      │ ～ 6
└─────────────────────────────┘
```

**INTERNATIONAL SEARCH REPORT**

| International application No. |
| --- |
| PCT/JP2010/064540 |

A. CLASSIFICATION OF SUBJECT MATTER
*G06T7/00*(2006.01)i, *G06F21/20*(2006.01)i

According to International Patent Classification (IPC) or to both national classification and IPC

B. FIELDS SEARCHED

Minimum documentation searched (classification system followed by classification symbols)
G06T7/00, G06F21/20

Documentation searched other than minimum documentation to the extent that such documents are included in the fields searched
| Jitsuyo Shinan Koho | 1922-1996 | Jitsuyo Shinan Toroku Koho | 1996-2010 |
| Kokai Jitsuyo Shinan Koho | 1971-2010 | Toroku Jitsuyo Shinan Koho | 1994-2010 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
| --- | --- | --- |
| Y<br><br>A | JP 2002-288667 A (NEC Corp.),<br>04 October 2002 (04.10.2002),<br>paragraphs [0029] to [0049]<br>& US 7043083 B2      & EP 1248225 A2<br>& DE 60220118 D      & DE 60220118 T<br>& AU 2763202 A      & CA 2378108 A<br>& AU 784873 B      & KR 10-2002-0077192 A<br>& CN 1378177 A      & CA 2378108 A1 | 1-3,6-9,<br>12-15<br>4,5,10,11 |
| Y | JP 2001-229379 A (Mitsubishi Electric Corp.),<br>24 August 2001 (24.08.2001),<br>paragraph [0022]<br>(Family: none) | 1-3,6-9,<br>12-15 |

☒ Further documents are listed in the continuation of Box C.  ☐ See patent family annex.

| * | Special categories of cited documents: |
| --- | --- |
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search<br>09 September, 2010 (09.09.10) | Date of mailing of the international search report<br>21 September, 2010 (21.09.10) |
| --- | --- |
| Name and mailing address of the ISA/<br>Japanese Patent Office | Authorized officer |
| Facsimile No. | Telephone No. |

Form PCT/ISA/210 (second sheet) (July 2009)

**INTERNATIONAL SEARCH REPORT**

International application No.

PCT/JP2010/064540

C (Continuation). DOCUMENTS CONSIDERED TO BE RELEVANT

| Category* | Citation of document, with indication, where appropriate, of the relevant passages | Relevant to claim No. |
|---|---|---|
| Y | JP 2007-259964 A (Fujitsu Ltd.),<br>11 October 2007 (11.10.2007),<br>paragraph [0047]<br>& US 2007/0223791 A1  & EP 1840793 A1<br>& DE 602006001361 D  & KR 10-2007-0096739 A | 6 |
| A | WO 2009/104429 A1 (NEC Corp.),<br>27 August 2009 (27.08.2009),<br>entire text; all drawings<br>(Family: none) | 1-15 |

Form PCT/ISA/210 (continuation of second sheet) (July 2009)

**EP 2 477 157 A1**

## REFERENCES CITED IN THE DESCRIPTION

### Patent documents cited in the description

- JP 2002288687 A

- JP 2009208042 A

### Non-patent literature cited in the description

- **MONDEN ; HUANG ; YOSHIMOTO.** Accuracy Evaluation of Fingerprint Which Can Guarantee Individual Safety. *Proc. of The 2005 Symposium on Cryptography and Information Security,* 2005, 541-546
- **MONDEN ; HUANG ; YOSHIMOTO.** Fingerprint Check Which Can Guarantee Individual Safety. *Proc. of The 2007 Symposium on Cryptography and Information Security,* 2007
- **UNE ; OTSUKA ; IMAI.** Wolf Attack Probability: a New Security Measure in Biometrics-Based Authentication Systems. *Proc. of The 2007 Symposium on Cryptography and Information Security,* 2007
- **KAWAKAMI ; SHIGETOMI ; YOSHIZOE ; UNE ; OTSUKA ; IMAI.** A Theoretical Study on Wolves in Minutiae Matching Algorithm. *Proc. of The 2007 Symposium on Cryptography and Information Security,* 2007

- **MIURA ; NAGASAKA ; MIYATAKE.** Feature Extraction of Finger Vein Patterns Based on Iterative Line Tracking and Its Application to Personal Identification. *IEICE Transactions on Communications,* 2003, vol. J86-DII (5), 678-687
- **WATANABE ; SHIGETOMI ; UNE ; OTSUKA ; IMAI.** Universal Wolves in a Matching Algorithm for Finger Vein Patterns. *Proc. of Computer Security Symposium (CSS2006,* 2006
- **KOJIMA ; SHIGETOMI ; INUMA ; OTSUKA ; IMAI.** An Efficient and Secure Protocol in a Framework of Matching Algorithms Based on Wolf Attack Probability. *Proc. of The 2009 Symposium on Cryptography and Information Security,* 2009